# EUROPÄISCHE PATENTANMELDUNG

(11) **EP 3 553 717 A1**
(43) Veröffentlichungstag der Anmeldung: **16.10.2019**
(21) Anmeldenummer: 19166663.5
(22) Anmeldetag: 01.04.2019
(51) Int. Cl.: G06Q 10/08, G06Q 50/12, G06Q 50/28, G06Q 50/30, B65G 1/00

(54) **SYSTEM UND VERFAHREN ZUR INFORMATIONSVERARBEITUNG VON INVENTARINFORMATIONEN**

(30) Priorität: 09.04.2018 CH 4532018
(71) Anmelder: Bucher Leichtbau AG, 8117 Fällanden (CH)
(72) Erfinder: PFEFFERKORN, Herbert, 8121 Benglen (CH); WILBURGER, Andreas, 6861 Alberschwende (AT); FEUERSTEIN, Reinhard, 6874 Bizau (AT); SOLGER, Hans-Joachim, 87600 Kaufbeuren (DE)
(74) Vertreter: Liebetanz, Michael

(57) **Zusammenfassung**

Ein System zur Informationsverarbeitung von Inventarinformationen von Bordküchen eines Flugzeugs umfasst ein Bordküchensteuermodul mit einer Datenbank, in der Informationen zu einem Flug, zu Trolleys (30), und zu in diesen Trolleys (30) zu liefernden Nahrungsmitteleinheiten speicherbar sind. Dabei sind eine Vielzahl von Nahrungsmittel-Identifikationsetiketten vorhanden, die Informationen zu einzelnen Nahrungsmitteleinheiten tragen. Mit einer optischen Erkennungseinheit (411) werden die Nahrungsmittel-Identifikationsetiketten ausgelesen und an das Bordküchensteuermodul übertragen. Dabei ist diese optische Erkennungseinheit (411) auf einem Trolley (30) positionierbar, um einen räumlichen Erfassungsbereich (40, 410) der optischen Erkennungseinheit (411) abzudecken, durch den jede Nahrungsmitteleinheit bei einer Abgabe derselben an Passagiere hindurchgeführt wird, um das der abzugebenden Nahrungsmitteleinheit zugeordnete Nahrungsmittel-Identifikationsetikett auszulesen und die Daten als auszucheckende Einheit an das Bordküchensteuermodul zu übertragen.

## Beschreibung

### TECHNISCHES GEBIET

Die vorliegende Erfindung betrifft ein System zur Informationsverarbeitung von Inventarinformationen von Bordküchen eines Flugzeugs, ein entsprechendes Verfahren und ein damit ausgestattetes Flugzeug.

### STAND DER TECHNIK

Fluggäste werden bei den meisten Flügen ein- oder mehrmals mit Verpflegung versorgt. Dafür werden Flugzeuge vor Abflug mit den entsprechenden Nahrungsmitteln beladen, die dann als vorkonfektionierte Portionen, gegebenenfalls im Flugzeug noch aufgewärmt, an die Passagiere abgegeben werden. Üblicherweise werden diese Nahrungsmittel in entsprechenden Containern bereitgestellt, die in sogenannten Trolleys verteilt werden. Teilweise findet ein Zusammenführen von Nahrungsportionen aus Containern, die in der Bordküche, der Galley, erwärmt werden und vorkonfektionierten Tabletts statt.

Die DE 10 2005 049 688 beschreibt einen Trolley mit einer Messeinrichtung und einem Stromversorgungssystem. Eine in den Trolley eingebaute Messeinrichtung misst beispielsweise die Temperatur der im Trolley eingelagerten Nahrungsmittel. Diese Daten werden automatisch an Datenverarbeitungsanlagen beispielsweise in der Galley übermittelt.

Die US 8,543,259 offenbart ein Informationssystem, welches einem Passagier aus der Galley verfügbare Informationen hinsichtlich der vorhandenen Nahrungsmittel und dem Wetter übermittelt. Portionen dieser Nahrungsmittel können dann über einen Rückkanal gebucht und reserviert werden.

Die WO 2015/057730 beschreibt ein Verfahren zur Erzeugung eines Beladeplans für eine Galley, bei dem beladene Trolleys angefordert werden, die dann an vorbestimmten Stellen in der Galley zu verstauen sind. Eine graphische Darstellung des Ladeplans unterstützt dabei die Besatzung. Es ist möglich, Untergruppen von Waren auszuwählen, die in die zu ladenden Trolleys einzubringen sind, so dass dann an Bord eines Flugzeugs gelangt, was dort gebraucht wird.

Die WO 2016/060561 beschreibt ein Informationssystem, bei dem der Passagier eines Flugzeuges einen in der Galley in einem Trolley vorhandenen Artikel von seinem Platz aus online reservieren kann und dabei geprüft wird, ob der Artikel vorhanden ist. Dieses Verfahren kann auch für einen fahrenden Trolley ausserhalb der Galley Verwendung finden.

Ein RFID-basiertes Catering-System ist aus der Broschüre des Fraunhoferinstituts IAO: https://www.e-business.iao.fraunhofer.de/de/publikationen/rfid/beschreibungen/ic_rfid.html bekannt.

### DARSTELLUNG DER ERFINDUNG

Ausgehend von diesem Stand der Technik, liegt der Erfindung die Aufgabe zugrunde, ein Cateringsystem für Flugzeuge anzugeben, welches die Inventarisierung technisch vereinfacht und damit in den Ergebnissen genauer macht, ohne einen Zusatzaufwand für die Besatzung zu erzeugen.

Ein System zur Informationsverarbeitung von Inventarinformationen von Bordküchen eines Flugzeugs umfasst ein Bordküchensteuermodul mit einer Datenbank, in der Informationen zu einem Flug, zu Trolleys und Nahrungsmittelbehältern, und zu in diesen Trolleys und Nahrungsmittelbehältern zu liefernden Nahrungsmitteleinheiten speicherbar sind. Solche Nahrungsmitteleinheiten sind in der Regel Tabletts mit mehreren für die Passagiere einheitliche Nahrungsmitteln und teilweise einer zu ergänzenden warmen Mahlzeit. Ferner ist ein Bodensteuermodul mit einer Datenbank vorgesehen, in der Informationen zu einem Flug, zu Trolleys und Nahrungsmittelbehältern, und zu in diesen Trolleys und Nahrungsmittelbehältern zu liefernde Nahrungsmitteleinheiten speicherbar sind. Dieses Bodensteuermodul ist einem Caterer zugeordnet, wobei auch mehrere Bodensteuermodule bei Vorhandensein von verschiedenen Caterern möglich sind. Jeder Caterer stellt eine Vielzahl von Nahrungsmittel-Identifikationsetiketten bereit, die Informationen zu einzelnen Nahrungsmitteleinheiten tragen. Diese Nahrungsmittel-Identifikationsetiketten weisen optisch automatisch auslesbare Merkmale auf, die von Kameras erkennbar und direkt verarbeitbar sind. Ferner bestehen eine Vielzahl von Behälter-Identifikationsetiketten, die Informationen zu einzelnen Trolleys und Nahrungsmittelbehältern tragen, wobei in der Datenbank des Bodensteuermoduls die Informationen zu den Behälter-Identifikationsetiketten und den Nahrungsmittel-Identifikationsetiketten zusammengeführt werden. Mit anderen Worten, jedem Behälter-Identifikationsetikett sind ein oder mehrere Nahrungsmittel-Identifikationsetiketten zugeordnet. In dem Flugzeug ist mindestens eine optische Erkennungseinheit vorgesehen, mit der die Nahrungsmittel-Identifikationsetiketten auslesbar und an das Bordküchensteuermodul übertragbar sind. Dabei besteht eine Datenverbindung zwischen dem Bodensteuermodul und dem Bordküchensteuermodul, um die Informationen zu einzelnen Trolleys und Nahrungsmittelbehältern sowie die diesen zugeordneten zu liefernde Nahrungsmitteleinheiten an das Bordküchensteuermodul zu übertragen. Dafür ist die optische Erkennungseinheit auf einem Trolley positionierbar, um einen räumlichen Erfassungsbereich der optischen Erkennungseinheit abzudecken, durch den jede Nahrungsmitteleinheit bei einer Abgabe derselben an Passagiere hindurchgeführt wird, um das der abzugebenden Nahrungsmitteleinheit zugeordnete Nahrungsmittel-Identifikationsetikett auszulesen und die Daten als auszucheckende Einheit an das Bordküchensteuermodul zu übertragen. Der räumliche Erfassungsbereich ist der Bereich, den die Kamera der optischen Erkennungseinheit erkennen kann und in dem diese einen Code des Etiketts auslesen kann, vorzugsweise unter Abgabe eines Quittierungssignals.

Vorteilhafterweise ist die optische Erkennungseinheit auf der Oberseite des Trolleys positioniert und die Kamera der optischen Erkennungseinheit deckt als räumlichen Erfassungsbereich einen Bereich oberhalb der optischen Erkennungseinheit ab. Alternativ kann die optische Erkennungseinheit auf der Oberseite des Trolleys oder in einem nahe der Oberseite vorgesehenen Einschub positionierbar und die Kamera der optischen Erkennungseinheit ist nach vorne auf die offene Seite des Trolleys ausgerichtet. Dabei ist dann als räumlicher Erfassungsbereich der Bereich vor der offenen Seite des Trolleys abgedeckt. Dabei ergibt sich der räumliche Erfassungsbereich als ein Bereich vor der offenen Seite des Trolleys, der dort von der Horizontalen bis zu 60 Grad nach unten oder 45 Grad nach oben abgedeckt wird. Dabei ergibt sich jeweils ein Erfassungskegel, der sich von dem Objektiv der Kamera abgeht und bis zu einer Erfassungs-Entfernung erstreckt.

Die Nahrungsmitteleinheiten umfassen in der Regel ein Tablett, wobei die Nahrungsmittel-Identifikationsetiketten auf dem Deckel oder auf der Stirnseite des Tabletts einer zu ergänzenden aufzuwärmenden Nahrungsmitteleinheit oder auf der Unterseite des Tabletts aufgebracht sind. Für die beiden ersten Alternativen ist die Anordnung mit einer nach vorne und unten schauenden Kameraeinheit vorteilhaft. Für die letzte Alternative ist die nach oben schauende Kameraeinheit vorteilhaft. Dabei kann die nach vorne schauende Kameraeinheit auch den Bereich oberhalb der Horizontalen abscannen.

Die Nahrungsmittel-Identifikationsetiketten können bei gleichen Nahrungsmitteleinheiten eine eine Unterscheidung verschiedener ansonsten gleichartiger Nahrungsmitteleinheiten erlaubende Information umfassen. Die Nahrungsmittel-Identifikationsetiketten können einen QR-Code, einen EAN-Code oder einen anderen optisch auslesbaren Code umfassen. Die Codes können druckfähige Codes umfassen, die in einfacher robuster Weise auslesbar sind.

Ein Verfahren zur Informationsverarbeitung von Inventarinformationen von Bordküchen eines Flugzeugs setzt ein System mit den oben beschriebenen Merkmalen ein, wobei ein Caterer eine Vielzahl von Nahrungsmitteleinheiten auf zugeordneten Tabletts konfektioniert und jeweils mit einem Nahrungsmittel-Identifikationsetikett versieht, eine Vielzahl von Nahrungsmitteleinheiten in Trolleys und Nahrungsmittelbehältern zu versorgen und ein Computersystem mit einer Datenbank bereitstellt, in welcher Fluginformationen, die bereitzustellenden Trolleys und Nahrungsmittelbehältern und die in diesen bereitgestellten Nahrungsmitteleinheiten gespeichert werden, wobei diese Informationen aus der Datenbank des Computersystems des Caterers an ein Computersystem der Bordküche übermittelt wird, wobei bei Entnahme von Nahrungsmitteleinheiten aus den Trolleys bei der Abgabe an Passagiere des zu versorgenden Fluges zu einer automatischen Erfassung der entnommenen Nahrungsmitteleinheit durch Vorbeiführen derselben in einem räumlichen Erfassungsbereich der an dem Trolley angeordneten optischen Erkennungseinheit und zu einem Auffrischen des Inventars der entsprechenden Nahrungsmitteleinheit in der Datenbank des Computersystem der Bordküche führt.

Bei einem solchen Verfahren kann die Datenbank des Computersystems der Bordküche in Bezug auf den Trolley, aus dem die Nahrungsmitteleinheit entnommen worden ist, aufgefrischt wird, und/oder in Bezug auf die Bordküche, aus dem der Trolley entnommen worden ist und/oder in Bezug auf das Flugzeug bei dem Vorhandensein mehrerer Bordküchen im Flugzeug.

Ein Flugzeug umfasst eine Passagierkabine und mindestens eine Bordküche, in der ein oben beschriebenes System zur Informationsverarbeitung von Inventarinformationen von Bordküchen eingebaut ist, wobei jeder Bordküche ein Bordküchensteuermodul eines Bordküchen-Computersystems und eine Vielzahl von Stauräumen zugeordnet ist, wobei in den Stauräumen Trolleys und Nahrungsmittelbehältern einsetzbar sind, wobei jedes Bordküchensteuermodul eine graphische Anzeige zur Darstellung der bestehenden oder verbleibenden Nahrungsmitteleinheit aufweist, insbesondere mit einer Zuordnung zu den in den Stauräumen oder im mobilen Einsatz befindlichen Trolleys und Nahrungsmittelbehältem.

Neben den Nahrungsmitteleinheiten können die Trolleys auch sogenannte Boardartikel aufweisen, bei denen es sich um Verkaufsartikel handelt. Dieses können ebenfalls Nahrungsmittel sein, die beispielsweise in einer bestimmten Sitzklasse nur gegen Entgelt abgegeben werden oder es können - üblicherweise zollbefreite - Artikel sein, die Reisende während des Fluges für eine Mitnahme an den Zielort erwerben, häufig Zigaretten, Parfüm etc.. Bei einem solchen System weist dann die Datenbank des Bodensteuermoduls und die des Bordküchensteuermoduls parallel zusätzlich zu den Einträgen zu verfügbaren Nahrungsmitteleinheiten auch Einträge zu verfügbaren Boardartikeln auf, die üblicherweise in getrennten Trolleys mitgeführt werden und in diesen zugewiesenen Trolleys speicherbar sind. Die optische Erkennungseinheit ist dann zusätzlich mit einem PoS-Terminal verbunden, um die Daten eines Boardartikels als auszucheckende Einheit neben der Übertragung an das Bordküchensteuermodul auch in dem PoS-Terminal als Verkaufsvorgang abzuwickeln. Dabei kann die optische Erkennungseinheit und das PoS-Terminal als eine elektronische Einheit wie einem Tablet-Computer ausgestaltet sein. Ein Boardartikel ist gegenüber einer üblichen Nahrungsmitteleinheit durch einen zusätzlichen Preis gekennzeichnet, der in einem entsprechenden Feld gespeichert wird. Das entsprechende Feld bei den üblichen Nahrungsmitteleinheiten ist dann 0. Die Preise können auch sitzklassenweise angepasst sein.

Bei einem Verfahren zum Einsatz von Boardartikel zusätzlich wird die Datenbank des Computersystems in Bezug auf den Trolley, aus dem ein Board-Artikel entnommen worden ist, aufgefrischt, und mit den Preis-Daten des Board-Artikels wird in einem PoS-Terminal der Verkauf des Boardartikels abgewickelt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein schematisches Bild im Überblick von sowohl Informationsflüssen, Warenflüssen sowie strukturellen Merkmalen eines Ausführungsbeispiels der vorliegenden Erfindung beim Caterer;
- Fig. 2: ein schematisches Bild für den Beladungsvorgang im Flugzeug mit den Elementen gemäss einem Ausführungsbeispiel der Erfindung;
- Fig. 3: einen schematischen Aufbau für die Abgabe von Nahrungsportionen auf Tabletts an Fluggäste bei der Herausnahme der Nahrungsportionen auf den Tabletts aus einem Trolley; und
- Fig. 4A & 4B: schematische Darstellungen verschiedener automatischer räumlicher Erfassungsbereiche gemäss Ausführungsbeispielen der Erfindung.

### BESCHREIBUNG BEVORZUGTER AUSFÜHRUNGSFORMEN

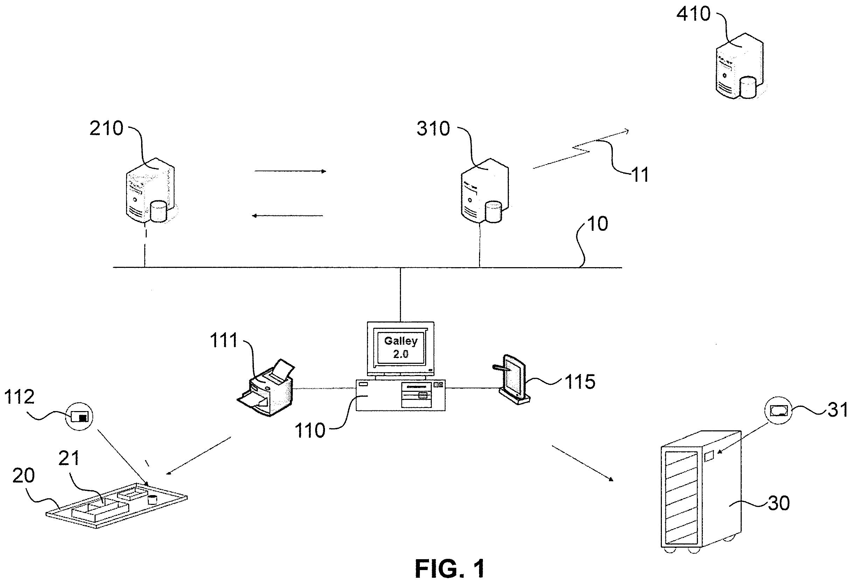

Für die Fluggesellschaften ist es beim Catering wesentlich, zu grosse Bestellungen oder zu geringe Bestellungen beim Lieferanten zu vermeiden, also die Verfolgbarkeit der abgegebenen Nahrungsportionen zu verbessern. Dabei steht die Schnelligkeit der Abgabe beim Passagier in Konkurrenz zum Bestreben der Überprüfbarkeit der entsprechenden Bestände. Damit dies im Flugbetrieb rationell geschieht, ist das Gesamtsystem anzupassen, um an zentraler Stelle einen technischen Vorteil zu erreichen. Damit ist es wesentlich, die Abläufe beim Caterer als Lieferanten und damit bei der Erstellung der entsprechenden Nahrungsmittelportionen aufzuzeigen. Fig. 1 zeigt hierfür ein schematisches Bild von sowohl Informationsflüssen, Warenflüssen sowie strukturellen Merkmalen der vorliegenden Erfindung im Überblick beim Caterer. Mit dem Bezugszeichen 110 ist symbolisch das Computersystem des Caterers bezeichnet, welches über Datenverbindungen 10 mit dem Computersystem 210 der Fluggesellschaft und der dort vorgesehenen Flug- und Buchungsdatenbank und dem bodengestützten Computersystem 310 gemäss der Erfindung verbunden ist. Ferner ist dieses bodengestützten Computersystem 310 über vorzugsweise drahtlose Verbindungen 11 mit dem Computersystem der Bordküche 410 eines zu beliefernden Flugzeuges und der dortigen Datenbank des Systems gemäss einem Ausführungsbeispiel der Erfindung verbunden.

Beim Caterer werden aus einem Warenwirtschaftssystem heraus Artikelpakete zusammengestellt, die auf einem Tablett 20 verschiedene vorkonfektionierte Nahrungsmitteleinheiten 21 aufweisen. Mit einem beim Caterer vorhandenen Kennzeichnungsdrucker 111 am Computersystem 110 wird ein elektronisch oder optisch lesbares Etikett erzeugt und als Etikett 112 an dem Tablett 20 befestigt. Dabei ist unter optisch lesbar die maschinelle Erfassung über eine Kamera und Bilderkennung zu verstehen, also z.B. die automatische Erkennung eines QR-Codes oder eines anderen Barcodes.

Diese Befestigung kann bei einem Ausführungsbeispiel insbesondere an der Unterseite des Tabletts vorgesehen sein. Es kann sich um das Aufkleben des Etiketts 112 handeln. Es kann auch das Bedrucken eines Deckels oder einer Schale mit der Etikettinformation sein.

Dies kann die gesondert zuzuführende warme Essenseinheit sein, mit der das Standardtablett vervollständigt wird. Dann ist der Deckel oder die Schale das Etikett, beziehungsweise der Etikettträger. Dann ist das Etikett 112 auf oder an der Oberseite des Tabletts 20 vorgesehen.

Bei einer dritten Alternative ist das Etikett 112 mit der optisch lesbaren Fläche an der kurzen Seitenfläche vorgesehen, insbesondere als Lasche, beispielsweise als Lasche für die Schale der zu ergänzenden warmen Essenseinheit. Oder das Etikett wird an dem kurzen Ende des Tabletts 20 befestigt, wobei vorteilhafterweise zusätzlich eine in Druckschrift gehaltene Information zu der zu komplettierenden zu ergänzenden warmen Essenseinheit aufgedruckt ist.

Der Kennzeichnungsdrucker 111 ist mit dem Computersystem 110 des Caterers verbunden und erstellt so eine Datenbank der Tabletts 20, welches Tabletts 20 anschliessend in einen Trolley 30 geladen werden.

Bei der Abgabe von warmen Mahlzeiten wird das Tablett 20 erst im Flugzeug mit der in der Bordküche erwärmten Mahlzeit fertiggestellt. In der Regel werden die Standard bestückten Tabletts 20 in einem Bereich des Trolleys 30 angeordnet und die aus einem weiteren Behälter hinzugestellten aufgewärmten Speisen in einem anderen Bereich des Trolleys 30. Dabei kann die Datenbank der Bordküche automatisch nach dem Einbringen der warmen Speisen auf den tatsächlichen Inventarbestand aufgefrischt werden. Es ist auch möglich eines oder mehrere Tabletts 20 mit speziellen Passagierwünschen wie vegan, halal, koscher, allergenfrei etc. in dem Trolley 30 verstauen zu denen dann entsprechend zugehörige warme Speisen zugestellt werden, so dass der Service kontinuierlich und nicht unterbrochen stattfinden kann.

Bei einer alternativen Ausgestaltung wird das Etikett 112 nicht am Tablett 20 befestigt, sondern auf dem das Tablett 20 vervollständigenden weiteren Nahrungsmittel, da dieses häufig das einzige unterschiedliche Nahrungsmittel ist, welches einem Standardtablett 20 hinzugefügt wird. Bei einer weiteren Ausgestaltung weist das Etikett 112 auf einen besonderen Nahrungsmittelwunsch wie halal, koscher, vegetarisch etc. hin, welches dann auch einem speziell aufportionierten Tablett 20 entspricht.

Die Tabletts 20 mit den entsprechenden Etiketten 112 bzw. die Tabletts 20 mit den aufzuwärmenden Speisen und den dort vorgesehenen Etiketten 112 werden anschliessend in einen Trolley 30 eingebracht, der mit einem RFID Medium 31 versehen ist. Die aufzuwärmenden Speisen können auch getrennt in einem entsprechenden Kühlcontainer in einem weiteren Trolley 30 vorbereitet werden. Dann werden diese Trolleys 30 als Einheit betrachtet und sind zusammen dem Bodenservice für die Beladung des Flugzeugs abzugeben.

Dabei werden Trolleys 30 mit den Tabletts 20 entsprechend den Anforderungen des die Bestellung aufgebenden Datenbanksystems 310 befüllt, wobei die Datenbank des bodengestützten Computersystems 310 von ihrer Fluggesellschaft und deren Computersystem 210 die Angaben zum Flug, wie die Flugnummer und die notwendigen Artikel auf der Basis der Buchungen, übermittelt erhält. Diese Daten werden von der Datenbank des bodengestützten Computersystems 310 an die Catererdatenbank des Computersystems 110 übermittelt, wo mit einem entsprechenden elektronischen Lesegerät 115, insbesondere als Handgerät, der Trolley 30 anhand seines RFID Mediums 31 identifiziert und die zugehörige Beladung festgehalten und an die Datenbank 310 zurückgemeldet wird. Diese Datenbank 310 meldet dann die zu übergebenden Trolleys 30 mit dem entsprechend festgestellten Inhalt und den Codes der optisch lesbaren Etiketten 112 an die Datenbank 410 der Bordküche, wobei es sich dabei vorteilhafterweise um eine drahtlose Datenverbindung 410 handelt.

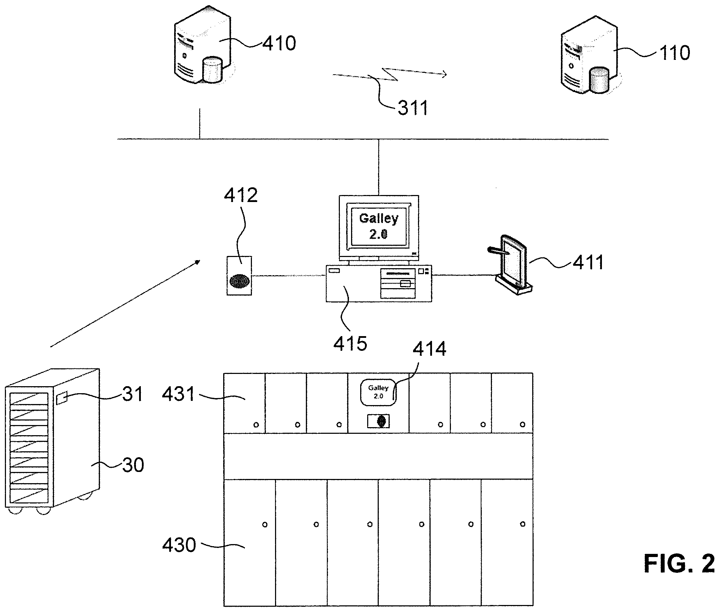

Die Fig. 2 zeigt schematisch den Beladungsvorgang im Flugzeug. Schematisch dargestellt ist ein Trolley 30 mit seinem RFID Medium 31, welches vom Caterer am Abflug-Flughafen in die Bordküche des Flugzeugs geliefert wird. Das RFID Medium 31 kann ein einem Trolley 30 zugeordnetes externes RFID Medium sein oder es kann speziell für die hier im System zu verwendenden Trolleys 30 vorgesehen und fest eingebaut sein. In der Bordküche (oder in einer oder jeder Bordküche, falls das Flugzeug mehrere hat) ist an das Computersystem 410 des Flugzeugs entsprechend eine Eingabe- und Ausgabestation 415 angeschlossen, die insbesondere einen RFID Leser 412 aufweist, mit dem das RFID Etikett 31 des Trolleys 30 einlesbar ist. Somit ist es möglich, die entsprechenden Trolleys 30 in entsprechende Stauräume 430 der Galley einzuschieben und gesondert gelieferte Container in andere Stauräume 431 z.B. in höher vorgesehene Stauräume einzubringen. Durch entsprechende RFID Sensoren in den Stauräumen 430 und 431 ist es in einer alternativen Ausgestaltung möglich, dass eine direkte Verbindung und Verknüpfung der eingeschobenen Behälter oder Trolleys 30 mit einer Anzeige im angeschlossenen Display 414 des Rechners 415 vorgesehen ist. Gleichzeitig zeigt das System 410/415 bei nacheinander vorgenommener Bevorratung der einen oder mehreren Galleys mit den einzelnen Trolleys 30 an, welches die Differenz zwischen Ist- und Soll-Bestand angelieferten Waren ist und kann gegebenenfalls bei der Datenbank 110 des Cateringunternehmens eine Nachbestellung vornehmen; entweder für den vorliegenden Flug oder einen nachfolgenden Flug. Dabei deutet die drahtlose Verbindung 311 in der Fig. 2 zum Computersystem 110 des Caterers an, dass diese Nachricht drahtlos übermittelt wird. Dies kann via die Verbindung 11 zuerst zum Rechner 310 des bodengestützten Computersystems geschehen, bevor es dann zum Computersystem 110 des Caterers übermittelt wird.

An dem Rechnersystem 415 der oder jeder Bordküche ist zusätzlich mindestens ein Lesegerät 411 für optische Codes vorgesehen, bei dem es sich um ein elektronisches Handgerät mit Kamera handeln kann. Mit dieser Kamera können die optischen Etiketten 112, die durch einen Erfassungsbereich 40, 140 bewegt werden, photographiert und dann automatisch erkannt werden, insbesondere wie oben erwähnt, sind dies QR-Codes oder auch EAN Codes, die in der im Zusammenhang mit der Fig. 1 beschriebenen Weise Teile der Verpackung von Nahrungsmitteln 21 oder des Tabletts 20 sind.

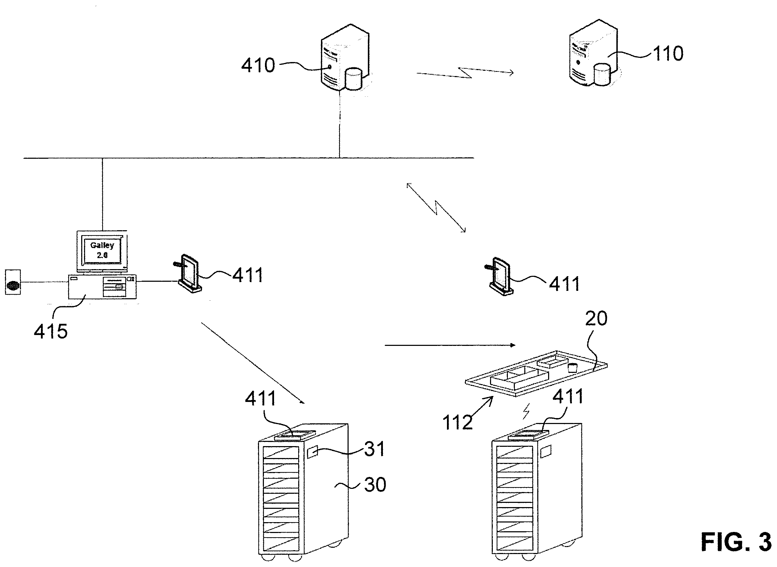

Die Fig. 3 zeigt nun schematisch die Abgabe von den Nahrungsportionen auf den Tabletts 20 an die Fluggäste bei der Herausnahme der Nahrungsportionen auf den Tabletts 20 aus einem Trolley 30. Aus seinem Behältnis 430 kann entweder automatisch über die besagten Sensoren in den Stauräumen 430 oder aus dem Containerbehälter 431 der herausgenommene Trolley 30 erkannt werden oder der Behälter wird durch das elektronische RFID-Handgerät 412 über Einlesen des RFID Etiketts 31 ausgebucht.

Vorzugsweise wird das elektronische Handgerät 411 mit dem intergierten Lesegerät für optische Codes auf dem Trolley 30 abgelegt oder an diesem befestigt. Bei einer Abgabe eines Tabletts 20 wird dieses aus den Schubladen des Trolleys 30 herausgezogen und, wenn das optisch lesbare Etikett 112 an der Unterseite des Tabletts 20 befestigt ist, über das Lesegerät 411 geführt und gehalten, so dass das entnommene Tablett 20 identifiziert und automatisch aus dem Bestand ausgebucht wird.

Bei einer Komplettierung des Tabletts 20 mit einer warmen Mahlzeit ist das optisch sichtbare und auslesbare Element vorteilhafterweise auf dem Deckel, auf dem Boden oder an der Stirnseite des Behältnisses, üblicherweise einer Aluminiumschale, befestigt, so dass dann dieses Element an oder über die Kamera des Handgeräts 411 zu halten ist, um die Art der entnommenen warmen Speise zu identifizieren.

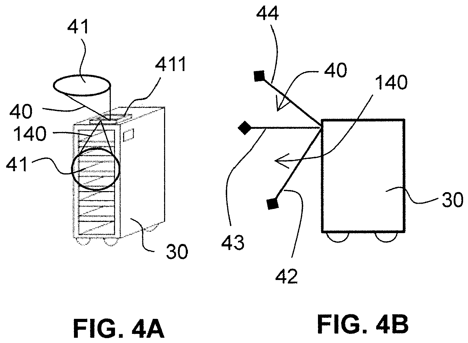

Die Fig. 4A und die Fig. 4B schliesslich zeigen schematische Darstellungen verschiedener automatischer räumlicher Erfassungsbereiche 40, 140 gemäss Ausführungsbeispielen der Erfindung.

Vorteilhaft kann das angebrachte Etikett 112 an der Unterseite des Tabletts 20 vorgesehen sein, so dass, wie in der Fig. 3 und der Fig. 4A dargestellt, ein Überstreichen des auf der Oberseite des Trolleys 30 angebrachten und mit seiner Kamera nach oben gerichteten elektronischen Handgeräts 412 die notwendige Aufnahme des Etiketts 112 im Erfassungsbereich 40 macht, der einen Kegel 41 aufspannt, so dass keine gesonderte Handhabung für die Inventarisierung durch das Personal mehr notwendig ist.

Um ein versehentliches zweimaliges Einlesen von gleichen QR-Codes zu vermeiden, werden für gleichartige warme Speisen oder Tabletts Codes verwenden, die für die Art der Speise eineindeutig sind, aber andererseits eine laufende Nummer beinhalten, so dass ein doppeltes Einlesen desselben Produktes ausgeschlossen werden kann. In einer vorteilhaften Ausgestaltung der Erfindung übermittelt das elektronische Handgerät 411 die Ausbuchungsvorgänge direkt und drahtlos an das Datenbankverarbeitungssystem der Bordküche 410, das die entsprechend in der Bordküche arbeitenden Personen direkt auf die Anzahl verbleibender und ausgehender Nahrungsmittel hinweisen kann.

Bei einer Anordnung des Etiketts 112 an der Stirnseite eines Tabletts 20 bzw. an der zur Stirnseite des Tabletts 20 orientierten aufgeheizten Nahrungsmittels weist ein Kameraobjektiv des elektronischen Handgeräts 411 nach vorne nach unten mit Bezug auf die offene Seite des Trolleys 30, wie dies in der Fig. 4A mit dem Erfassungsbereich 140 und dem entsprechenden Erfassungskegel 41 dargestellt ist, so dass ein Hochheben des Tabletts 20 aus der Ebene der Schubladen des Trolleys 30 das automatische Aufnehmen des optischen Codes ermöglicht. Dabei ist die Hauptebene der Kamera zwischen 0 und 60 Grad bezüglich der Horizontalen nach unten in den Bereich vor der offenen Seite des Trolleys 30 gerichtet. Dies ist in der Fig. 4B zwischen den Stecken 42 und 43 dargestellt, die die Grenzen 42 und 43 in der Höhe für den Erfassungskegel festlegen. Dies kann durch die Orientierung der Kamera im elektronischen Handgerät 411 erreicht werden, wobei das elektronische Handgerät 411 entweder auf die flache Oberseite des Trolleys 30 auflegbar ist oder in einer entsprechenden Schublade unter der Oberseite des Trolleys 30 einschiebbar ist, wie es in der Seitenansicht auf einen Trolley 30 in der Fig. 4B angedeutet ist. Dabei kann die Kamera auch dann die Etiketten 112 lesen, die auf den Deckel der zu ergänzenden Schalen mit der warmen Nahrungsmitteleinheit aufgebracht sind. Die Kamera kann auch dann teilweise nach oben ausgerichtet sein, zum Beispiel zwischen der oberen Begrenzung 44 und der mittleren Begrenzung 43 oder zwischen der oberen Begrenzung 44 und der unteren Begrenzung, wobei die obere Begrenzung beispielsweise +45 Grad gegenüber der Horizontalen festlegen kann, die mittlere Begrenzung 43 horizontal gleich 0 Grad oder plus minus 15 bis 30 Grad festlegen kann. Die untere Begrenzung 42 des Erfassungsbereichs 140 kann minus 45 bis 70 Grad, insbesondere bis minus 60 Grad ausgerichtet sein, um einen möglichst grossen Erfassungsbereich 140 zu ermöglichen.

In gleicher Weise ist es als Zusatzfunktion möglich, Getränke als abgegeben auszuchecken, indem ein auf entsprechenden Behältnissen befindlicher optischer Code automatisch ausgelesen wird, wenn er durch die Erfassungsbereich 40 oder 140 bewegt wird. Dabei kann es sich auch um den handelsüblichen EAN-Code handeln. Damit ist es automatisiert und für den Nachschub einfacher, die in den Schubladen des Getränketrolleys befindlichen Aluminiumdosen oder Flaschen in ihrer Anzahl festzuhalten und in der Datenbank des Bordküchensystems 410 aufzufrischen.

**BEZUGSZEICHENLISTE**

| | | | |
|---|---|---|---|
| 10 | Datenverbindung | 140 | Erfassungsbereich |
| 11 | drahtlose Datenverbindung | 210 | Computersystem der |
| 20 | Tablett | | Fluggesellschaft |
| 21 | Nahrungsmitteleinheit | 310 | bodengestütztes |
| 30 | Trolley | | Computersystem |
| 31 | RFID Medium | 311 | drahtlose Verbindung |
| 40 | Erfassungsbereich | 410 | Computersystem der |
| 41 | Erfassungskegel | | Bordküche |
| 42 | untere Begrenzung | 411 | Lesegerät für optische Codes |
| 43 | mittlere Begrenzung | 412 | RFID Leser |
| 44 | obere Begrenzung | 414 | Anzeige / Display |
| 110 | Computersystem des Caterers | 415 | Eingabe- und Ausgabestation |
| 111 | Kennzeichendrucker | 430 | Stauraum |
| 112 | Etikett | 431 | Stauraum |
| 115 | elektronisches Lesegerät | | |

## Patentansprüche

1. System zur Informationsverarbeitung von Inventarinformationen von Bordküchen eines Flugzeugs, umfassend:
ein Bordküchensteuermodul (410, 415) mit einer Datenbank, in der Informationen zu einem Flug, zu Trolleys und Nahrungsmittelbehältern (30), und zu in diesen Trolleys und Nahrungsmittelbehältern (30) zu liefernden Nahrungsmitteleinheiten (20, 21) speicherbar sind,
ein Bodensteuermodul (110) mit einer Datenbank, in der Informationen zu einem Flug, zu Trolleys und Nahrungsmittelbehältern, und zu in diesen Trolleys und Nahrungsmittelbehältern zu liefernde Nahrungsmitteleinheiten speicherbar sind,
eine Vielzahl von Nahrungsmittel-Identifikationsetiketten (112), die Informationen zu einzelnen Nahrungsmitteleinheiten (20, 21) tragen,
eine Vielzahl von Behälter-Identifikationsetiketten (31), die Informationen zu einzelnen Trolleys und Nahrungsmittelbehältern (30) tragen, und
mindestens eine in einem Flugzeug vorgesehene optische Erkennungseinheit (411), mit der die Nahrungsmittel-Identifikationsetiketten (112) auslesbar und an das Bordküchensteuermodul (410, 415) übertragbar sind,
wobei eine Datenverbindung zwischen dem Bodensteuermodul (110) und dem Bordküchensteuermodul (410, 415) vorgesehen ist, um die Informationen zu einzelnen Trolleys und Nahrungsmittelbehältern (30) sowie die diesen zugeordneten zu liefernde Nahrungsmitteleinheiten an das Bordküchensteuermodul (410, 415) zu übertragen,
wobei die optische Erkennungseinheit (411) auf einem Trolley (30) positionierbar ist, um einen räumlichen Erfassungsbereich (40, 140) der optischen Erkennungseinheit (411) abzudecken, durch den jede Nahrungsmitteleinheit bei einer Abgabe derselben an Passagiere hindurchgeführt wird, um das der abzugebenden Nahrungsmitteleinheit zugeordnete Nahrungsmittel-Identifikationsetikett (112) auszulesen und die Daten als auszucheckende Einheit an das Bordküchensteuermodul (410, 415) zu übertragen.

2. System nach Anspruch 1, **dadurch gekennzeichnet, dass** die optische Erkennungseinheit (411) auf der Oberseite des Trolleys (30) positionierbar ist und die Kamera der optischen Erkennungseinheit (411) als räumlichen Erfassungsbereich (40) einen Bereich oberhalb der optischen Erkennungseinheit (411) abdeckt.

3. System nach Anspruch 1, **dadurch gekennzeichnet, dass** die optische Erkennungseinheit (411) auf der Oberseite des Trolleys (30) oder in einem nahe der Oberseite vorgesehenen Einschub positionierbar ist und dass die Kamera der optischen Erkennungseinheit (411) nach vorne auf die offene Seite des Trolleys (30) ausgerichtet und als räumlichen Erfassungsbereich (40, 410) einen Bereich vor der offenen Seite des Trolleys (30) abdeckt.

4. System nach Anspruch 3, **dadurch gekennzeichnet, dass** der räumliche Erfassungsbereich (40, 140) einen Bereich vor der offenen Seite des Trolleys (30) von der Horizontalen (43) bis zu 60 Grad nach unten (42) oder von 30 Grad nach oben (44) bis 45 Grad nach unten abdeckt.

5. System nach einem der Ansprüche 1 bis 4, **dadurch gekennzeichnet, dass** die Nahrungsmitteleinheiten (21) ein Tablett (20) umfassen, wobei die Nahrungsmittel-Identifikationsetiketten (112) auf dem Deckel oder auf der Stirnseite des Tabletts (20) einer zu ergänzenden aufzuwärmenden Nahrungsmitteleinheit oder auf der Unterseite des Tabletts (20) aufgebracht sind.

6. System nach einem der Ansprüche 1 bis 5, **dadurch gekennzeichnet, dass** die Nahrungsmittel-Identifikationsetiketten (112) bei gleichen Nahrungsmitteleinheiten (21) eine eine Unterscheidung verschiedener ansonsten gleichartiger Nahrungsmitteleinheiten (21) erlaubende Information umfasst.

7. System nach einem der Ansprüche 1 bis 6, **dadurch gekennzeichnet, dass** die Nahrungsmittel-Identifikationsetiketten (112) einen QR-Code, einen EAN-Code oder einen anderen optisch auslesbaren Code umfasst.

8. System nach einem der Ansprüche 1 bis 7, **dadurch gekennzeichnet, dass** die Datenbank des Bodensteuermoduls (110) und des Bordküchensteuermoduls (410, 415) parallel zusätzlich zu den Einträgen zu verfügbaren Nahrungsmitteleinheiten (20, 21) auch Einträge zu verfügbaren Boardartikeln aufweisen, die in diesen zugewiesenen Trolleys speicherbar sind, und dass die optische Erkennungseinheit (411) mit einem PoS-Terminal verbunden ist, um die Daten eines Boardartikels als auszucheckende Einheit neben der Übertragung an das Bordküchensteuermodul (410, 415) auch in dem PoS-Terminal als Verkaufsvorgang abzuwickeln.

9. Verfahren zur Informationsverarbeitung von Inventarinformationen von Bordküchen eines Flugzeugs für ein System nach einem der Ansprüche 1 bis 8, wobei ein Caterer eine Vielzahl von Nahrungsmitteleinheiten (21) auf zugeordneten Tabletts (20) konfektioniert und jeweils mit einem Nahrungsmittel-Identifikationsetikett (112) versieht, eine Vielzahl von Nahrungsmitteleinheiten (21) in Trolleys und Nahrungsmittelbehältern (30) zu versorgen und ein Computersystem (110) mit einer Datenbank bereitstellt, in welcher Fluginformationen, die bereitzustellenden Trolleys und Nahrungsmittelbehältern (30) und die in diesen bereitgestellten Nahrungsmitteleinheiten (21) gespeichert werden, wobei diese Informationen aus der Datenbank des Computersystems (110) des Caterers an ein Computersystem (410) der Bordküche übermittelt wird, wobei bei Entnalune von Nahrungsmitteleinheiten (21) aus den Trolleys (30) bei der Abgabe an Passagiere des zu versorgenden Fluges zu einer automatischen Erfassung der entnommenen Nahrungsmitteleinheit (21) durch Vorbeiführen derselben in einem räumlichen Erfassungsbereich (40, 140) der an dem Trolley (30) angeordneten optischen Erkennungseinheit (411) und zu einem Auffrischen des Inventars der entsprechenden Nahrungsmitteleinheit (21) in der Datenbank des Computersystem (410) der Bordküche führt.

10. Verfahren nach Anspruch 9, bei dem die Datenbank des Computersystems (410) der Bordküche in Bezug auf den Trolley (30), aus dem die Nahrungsmitteleinheit (21) entnommen worden ist, aufgefrischt wird, und/oder in Bezug auf die Bordküche, aus dem der Trolley (30) entnommen worden ist und/oder in Bezug auf das Flugzeug bei dem Vorhandensein mehrerer Bordküchen im Flugzeug.

11. Verfahren nach Anspruch 9 oder 10, **dadurch gekennzeichnet, dass** die Datenbank des Computersystems in Bezug auf den Trolley (30), aus dem ein Board-Artikel entnommen worden ist, aufgefrischt wird, und mit den Preis-Daten des Board-Artikels in einem PoS-Terminal der Verkauf des Boardartikels abgewickelt wird.

12. Flugzeug, umfassend eine Passagierkabine und mindestens eine Bordküche, in der ein System zur Informationsverarbeitung von Inventarinformationen von Bordküchen nach einem der Ansprüche 1 bis 8 vorgesehen ist, wobei jeder Bordküche ein Bordküchensteuermodul (410) eines Bordküchen-Computersystems und eine Vielzahl von Stauräumen (430, 431) zugeordnet ist, wobei in den Stauräumen (430, 431) Trolleys und Nahrungsmittelbehältern (30) einsetzbar sind, wobei jedes Bordküchensteuermodul (410) eine graphische Anzeige (414) zur Darstellung der bestehenden oder verbleibenden Nahrungsmitteleinheit (21) aufweist, insbesondere mit einer Zuordnung zu den in den Stauräumen (430, 431) oder im mobilen Einsatz befindlichen Trolleys und Nahrungsmittelbehältern (30).
